(19) Europäisches Patentamt
European Patent Office
Office européen des brevets

(11) **EP 3 212 323 B1**

(12) **FASCICULE DE BREVET EUROPEEN**

(45) Date de publication et mention de la délivrance du brevet:
**03.10.2018 Bulletin 2018/40**

(21) Numéro de dépôt: **15786910.8**

(22) Date de dépôt: **23.10.2015**

(51) Int Cl.:
**B01J 19/24** *(2006.01)*    **F28F 27/02** *(2006.01)*

(86) Numéro de dépôt international:
**PCT/EP2015/074669**

(87) Numéro de publication internationale:
**WO 2016/066560 (06.05.2016 Gazette 2016/18)**

(54) **RÉACTEUR ÉCHANGEUR COMPORTANT DES MOYENS DE MODIFICATION DE LA DISTRIBUTION DE FLUIDE CALOPORTEUR**

AUSTAUSCHREAKTOR MIT VORRICHTUNG ZUR VERÄNDERUNG DER VERTEILUNG EINER WÄRMEÜBERTRAGUNGSFLÜSSIGKEIT

EXCHANGER REACTOR INCLUDING MEANS FOR MODIFYING THE DISTRIBUTION OF HEAT-TRANSFER FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.10.2014 FR 1460291**

(43) Date de publication de la demande:
**06.09.2017 Bulletin 2017/36**

(73) Titulaire: **Commissariat à l'énergie atomique et aux énergies alternatives
75015 Paris (FR)**

(72) Inventeurs:
• **BENGAOUER, Alain
F-38920 Crolles (FR)**

• **CIGNA, Julien
F-38630 Sassenage (FR)**
• **DUCAMP, Julien
F-38500 Voiron (FR)**

(74) Mandataire: **Brevalex
95, rue d'Amsterdam
75378 Paris Cedex 8 (FR)**

(56) Documents cités:
**WO-A1-2004/052526    WO-A1-2013/162222
DD-A1- 243 088    US-A1- 2007 258 872
US-A1- 2009 120 629**

**Description**

**DOMAINE TECHNIQUE**

La présente invention se rapporte au domaine général des réacteurs échangeurs destinés à la mise en oeuvre de réactions catalytiques endothermiques ou exothermiques.

L'invention trouve de nombreuses applications dans tous types de procédés mettant en oeuvre des réactions catalytiques endothermiques ou exothermiques, et notamment fortement endothermiques ou exothermiques, particulièrement du type solide-gaz. De tels procédés peuvent par exemple utiliser un catalyseur solide, sous forme de poudre ou supporté sur des structures monolithiques ou directement sur les parois d'un réacteur.

Ces procédés peuvent notamment comprendre des procédés de synthèse de carburants et de combustibles, par exemple des combustibles liquides, tels que le méthanol (MeOH), ou gazeux, tels que le méthane (SNG pour « Synthetic Natural Gas » en anglais) ou le diméthyléther (DME), obtenus à partir d'hydrogène et d'oxydes de carbone ou à partir de gaz de synthèse comprenant un mélange d'hydrogène et d'oxydes de carbone.

L'invention peut ainsi être tout particulièrement appliquée à des réactions très exothermiques, telles que celle de méthanation du monoxyde ou du dioxyde de carbone en présence d'hydrogène. Elle peut également s'appliquer à des réactions du type de celle de Fischer-Tropsch, de celle de reformage humide ou à sec du méthane ou d'autres hydrocarbures, ou encore des réactions d'oxydation. L'invention peut également être utilisée en tant qu'échangeur de chaleur pour des applications, notamment celles mettant en oeuvre un gaz, qui nécessitent des opérations de maintenance fréquentes, par exemple dues à la corrosion, à l'encrassement, entre autres.

L'invention propose ainsi un réacteur échangeur comportant des moyens de modification de la distribution de fluide caloporteur, ainsi qu'un procédé d'adaptation du débit de fluide caloporteur d'un circuit de fluide caloporteur d'un tel réacteur échangeur.

**ÉTAT DE LA TECHNIQUE ANTÉRIEURE**

On connaît déjà de nombreuses architectures de réacteurs échangeurs catalytiques utilisés dans l'industrie pour assurer le contrôle et le pilotage thermique de réactions chimiques endothermiques ou exothermiques. Les principaux types de réacteurs échangeurs connus pour les réactions exothermiques sont décrits ci-après.

Tout d'abord, la technologie la plus simple de réacteurs échangeurs catalytiques est la technologie de réacteurs dits « à lit fixe ». Dans ce cas, le réacteur échangeur se présente sous la forme d'un cylindre, à l'intérieur duquel le catalyseur est placé. Le catalyseur peut être présent sous la forme de granulés, par exemple du type extrudats, sphères ou anneaux de Raschig, entre autres. L'apport ou l'évacuation des calories sont généralement opérés par un fluide caloporteur qui circule dans un serpentin situé sur la paroi externe du réacteur ou qui est directement introduit à l'intérieur du réacteur.

La mise en oeuvre de réactions exothermiques au sein de ce type de réacteur échangeur pose de nombreuses difficultés. En effet, la mauvaise dissipation de la chaleur, due principalement à la faible conductivité thermique de l'ensemble formé par le gaz et le catalyseur, entraîne la formation de points chauds au sein du réacteur. Or, la présence de ces points chauds localisés entraîne des vitesses de réaction plus importantes et peut être à l'origine d'un emballement thermique du réacteur. Aussi, ces températures élevées peuvent nuire aux performances du réacteur échangeur, entraînant notamment une baisse de sélectivité ou de conversion, causer la désactivation du catalyseur, et ainsi diminuer grandement sa durée de vie et poser des problèmes de sécurité.

Dans le cas de réactions endothermiques, la formation de points froids est moins problématique car elle n'entraîne pas d'emballement thermique du réacteur. Cependant, ces points froids entraînent toujours une baisse importante des performances du réacteur échangeur.

Par ailleurs, ce type de réacteur échangeur à lit fixe présente aussi l'inconvénient d'engendrer une perte de charge élevée à travers le lit catalytique.

L'utilisation de réacteurs échangeurs à lits fixes multitubulaires permet d'augmenter l'efficacité de la gestion thermique de ces réacteurs. De tels réacteurs sont constitués de plusieurs tubes, de quelques centimètres de diamètre, remplis de catalyseur et placés dans une enceinte (ou calandre) où circule le fluide caloporteur. L'utilisation de tubes plus étroits peut cependant conduire à des phénomènes de court-circuit hydraulique (ou « by-pass » en anglais) aux parois, qui participent à la formation de points chauds et réduisent le temps de contact des réactifs avec le catalyseur, entraînant ainsi une diminution des performances du réacteur échangeur. De plus, la diminution de la taille des grains de catalyseur pouvant accompagner la réduction du diamètre des tubes, elle entraîne également une augmentation de la perte de charge. En outre, la gestion thermique de ce type de réacteur échangeur demeure parfois toujours insuffisante.

Par ailleurs, les solutions mises en place pour contrôler les réactions fortement exothermiques sont souvent complexes et coûteuses. Il peut s'agir par exemple de la dilution du catalyseur par des particules inertes, du recyclage de gaz, de la distribution des réactifs le long des réacteurs ou de manière étagée entre plusieurs réacteurs, ou encore de la dilution des réactifs par un gaz inerte. Dans tous les cas, ces solutions ont pour but de diminuer les vitesses de réaction et l'efficacité catalytique du réacteur échangeur afin de pouvoir contrôler l'exothermie de la réaction.

Aussi, l'architecture du type « à lit fixe » des réacteurs échangeurs présente l'avantage de la simplicité de fabrication mais rend difficile le contrôle thermique et nécessite l'utilisation de catalyseurs stables à haute température.

Une autre technologie de réacteurs échangeurs concerne les réacteurs échangeurs structurés. Inspirés des échangeurs thermiques à plaques, ces réacteurs échangeurs dans lesquels le fluide caloporteur circule dans des canaux caloporteurs insérés entre deux nappes de canaux réactifs pour leur refroidissement, où se trouve le catalyseur et où a lieu la réaction chimique, se prêtent mieux au contrôle de la température des procédés. En effet, la structuration et surtout la réduction de la section de passage du fluide caloporteur par rapport à une simple calandre permet d'intensifier les échanges thermiques entre le fluide caloporteur et le réacteur afin d'évacuer ou d'apporter des calories avec une meilleure efficacité. Pour de tels réacteurs échangeurs, les canaux réactifs, comme les canaux caloporteurs, peuvent être constitués d'un canal gravé dans une plaque ou encore constitués par l'espace laissé entre deux plaques. Selon la technologie choisie pour le refroidissement, ces réacteurs peuvent être isothermes ou anisothermes.

Par ailleurs, il existe également la technologie des réacteurs échangeurs à lits fluidisés. De tels réacteurs ont été développés pour répondre au problème de transfert thermique dans les lits fixes. Ces réacteurs présentent la particularité de mettre en mouvement les grains de catalyseur, d'une taille de l'ordre de la centaine de micromètres, ce qui permet un mélange qui améliore les transferts. Les réacteurs échangeurs à lits fluidisés offrent l'avantage d'une bonne homogénéité thermique dans les réacteurs, ce qui évite les points chauds. De plus, cette technologie présente de nombreux autres inconvénients, et notamment la formation de particules fines entraînées en dehors du réacteur, des difficultés d'extrapolation en taille ou encore des performances moindres en raison de rétro-mélanges dus au mouvement du catalyseur.

La combinaison de réacteurs échangeurs du même type ou de types différents au sein d'une même unité peut également être envisagée afin d'améliorer la conversion, la flexibilité ou la valorisation de la chaleur récupérée.

Ainsi, par exemple, le brevet US 4,298,694 B1 propose de combiner un réacteur échangeur adiabatique et un réacteur échangeur isotherme dont chacun traite une partie du flux d'entrée de gaz afin de récupérer la chaleur de réaction sous la forme de vapeur surchauffée, laquelle est obtenue par un échangeur connecté en sortie de l'étage adiabatique, tout en produisant un gaz à forte teneur en méthane grâce à la faible température obtenue en sortie du réacteur échangeur isotherme.

Dans le cas des réacteurs échangeurs, il existe de nombreuses variantes liées à la mise en oeuvre du catalyseur offrant des performances différentes en termes de surface spécifique réactive accessible au fluide, de propriétés thermiques et de pertes de charges.

Il est connu que, pour une pression donnée, la compétition entre la cinétique de réaction et l'équilibre thermodynamique conduit à l'existence d'une température optimale de catalyseur qui dépend de l'avancement de la réaction, et de la sélectivité dans le cas où plusieurs réactions concurrentes se produisent.

À titre d'exemple, on considère le cas de la méthanation du dioxyde de carbone ($CO_2$) selon la réaction: $CO_2 + 4H_2 \Leftrightarrow CH_4 + 2H_2O$, qui est fortement exothermique et présente une enthalpie de réaction $\Delta_rH_{298K}$ de -165 kJ/mol. On considère en outre un catalyseur de nickel-alumine sous forme de grains de 500 $\mu$m placés dans un canal de section 5mm x 40 mm x 200 mm, alimenté par un mélange à 5 bars d'un débit de 5 NL/min de réactifs de composition molaire égale à 80% d'hydrogène ($H_2$) et 20% de dioxyde de carbone ($CO_2$).

Alors, la conversion maximale de dioxyde de carbone ($CO_2$) sera obtenue pour une température de catalyseur très élevée en entrée et décroissant le long du canal réactif. Toutefois, pour éviter la dégradation rapide du catalyseur, la température d'entrée doit aussi être contrôlée. Si l'on considère 600°C comme la température maximale admissible du catalyseur, le profil de température optimal et la conversion optimale le long du canal peuvent être calculés à partir de la loi cinétique.

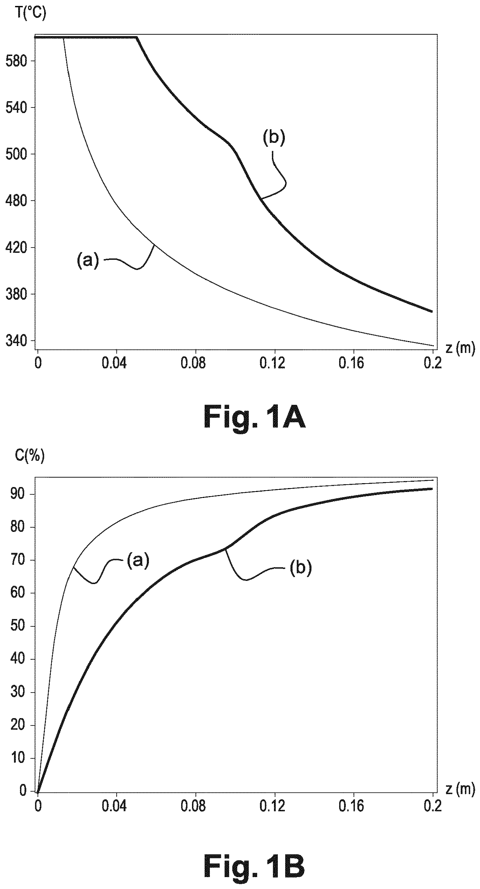

Au fil de l'utilisation du catalyseur, son activité diminue. On peut simuler cette diminution en supposant que sur la première moitié du canal, le catalyseur a perdu 75% de son activité alors que sur la seconde moitié il n'est pas dégradé La figure 1A est un graphique représentant l'évolution de la température T, exprimée en degrés Celsius, en fonction de la position axiale verticale z dans le réacteur, exprimée en mètres, pour un cas (a) de catalyseur neuf et un cas (b) de catalyseur usagé ou dégradé. De plus, la figure 1B est un graphique représentant l'évolution C de la conversion de $CO_2$, exprimée en pourcentages, en fonction de la position axiale verticale z dans le réacteur, pour le même cas (a) de catalyseur neuf et le même cas (b) de catalyseur usagé ou dégradé.

La comparaison des cas (a) et (b) sur les figures 1A et 1B montre bien la perte d'efficacité du catalyseur dégradé par rapport au catalyseur neuf, et notamment sa perte d'efficacité quant à la conversion de $CO_2$.

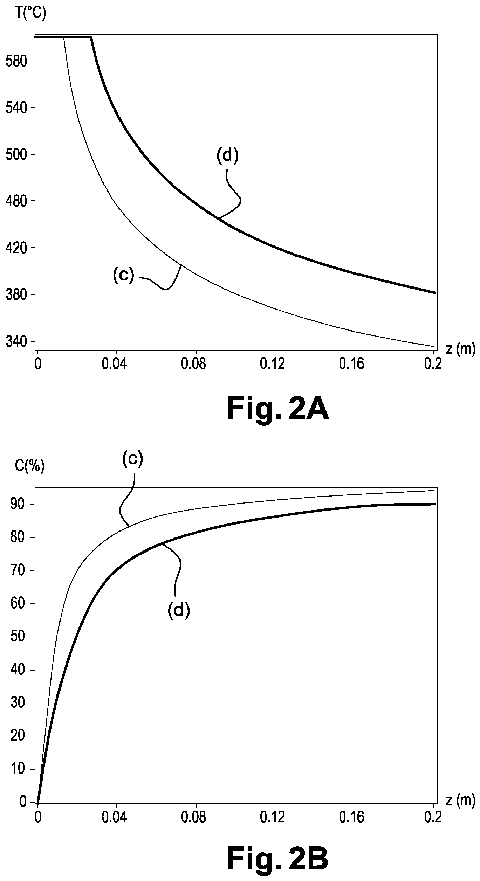

Lorsque le débit des gaz change, le profil optimal est aussi modifié. Ainsi, la figure 2A est un graphique représentant l'évolution de la température optimale T, exprimée en degrés Celsius, en fonction de la position axiale verticale z dans le réacteur, exprimée en mètres, pour un cas (c) de catalyseur neuf avec un débit de réactifs de 5 NL/min et un cas (d) de catalyseur neuf avec un débit de réactifs de 10 NL/min. De plus, la figure 2B est un graphique représentant l'évolution C de la conversion optimale de $CO_2$, exprimée en pourcentages, en fonction de la position axiale verticale z dans le réacteur, pour le même cas (a) de catalyseur neuf avec un débit de réactifs de 5 NL/min et le même cas (b) de catalyseur neuf avec un débit de réactifs de 10 NL/min.

On constate alors que les performances du catalyseur sont meilleures avec un débit nominal de 5 NL/min, et non le double.

La température optimale du catalyseur est donc élevée en entrée du réacteur et décroit le long du réacteur. La température maximale admissible dépend de la sensibilité du catalyseur à la désactivation, notamment par frittage, des particules de nickel métalliques dans cet exemple.

Une façon d'approcher cette température optimale est d'utiliser plusieurs réacteurs refroidis à des températures différentes ou un seul réacteur comprenant plusieurs étages de refroidissement, connectés à des circuits de caloporteur différents.

Une autre façon d'approcher cette température est d'utiliser un circuit de caloporteur à contre-courant du circuit de gaz et de s'appuyer sur l'élévation de la température du caloporteur pour obtenir une température élevée en entrée du réacteur. Cette approche pose cependant des problèmes délicats de pilotage et de sécurité vis-à-vis du risque d'emballement thermique.

Le brevet US 4,839,391 B1 décrit un réacteur échangeur catalytique pour la production de gaz de synthèse dont le refroidissement est assuré par un circuit d'eau circulant à contre-courant du gaz réactif. L'eau arrivant saturée ou proche de la saturation est d'abord vaporisée dans la partie aval du réacteur, puis est surchauffée en traversant le réacteur. La température des gaz suit alors un profil similaire à celui de l'eau mais est décalée vers les hautes températures à cause de la résistance thermique du lit fixe.

Plusieurs variantes d'un tel dispositif sont présentées, qui utilisent par exemple deux ou trois échangeurs différents, en série ou en parallèle, afin d'affiner le contrôle de la température et de permettre le pilotage du système.

Un intérêt du système décrit dans le brevet US 4,839,391 B1 est qu'il permet la fourniture de vapeur surchauffée utilisable pour la production d'électricité via une turbine à gaz. Cependant, le besoin de contrôler les échanges thermiques conduit à implanter plusieurs échangeurs différents dans deux ou trois zones prédéfinies, par exemple une zone d'évaporation et une zone de surchauffe, ce qui devient un inconvénient lorsque le réacteur est utilisé dans des conditions variables de pression et température, ou lorsque le catalyseur vieillit. De plus, dans ces configurations, le caloporteur se trouve en phase gazeuse au droit de la zone la plus chaude du réacteur et donc le médiocre échange thermique entre le gaz et les parois de l'échangeur nuit au bon contrôle de la température maximale du catalyseur, introduisant un risque d'emballement thermique et de vieillissement accéléré.

Une autre solution permettant un meilleur contrôle de la température du catalyseur et une plus grande flexibilité est d'utiliser un ou plusieurs réacteurs échangeurs isothermes ou quasi-isothermes en série. Cependant, dans cette configuration il convient de contrôler la température du fluide caloporteur indépendamment pour chaque étage de réacteur ce qui complexifie le système et induit un surcoût important.

## EXPOSÉ DE L'INVENTION

Il existe un besoin pour proposer une solution alternative d'architecture de réacteur échangeur permettant, notamment dans le cas de réactions fortement endothermiques ou exothermiques, de garantir un taux de conversion maximal et une bonne sélectivité dans des conditions d'utilisation variables, et ce même lorsque le catalyseur se désactive au cours du temps.

L'invention a pour but de remédier au moins partiellement aux besoins mentionnés précédemment et aux inconvénients relatifs aux réalisations de l'art antérieur.

L'invention vise notamment à concevoir une configuration d'un réacteur échangeur qui optimise au mieux le taux de conversion et la sélectivité de la réaction chimique, ainsi que la cinétique de désactivation du catalyseur, notamment dans le cas de réactions fortement exothermiques pour lesquelles l'évolution de la température conditionne ces paramètres.

L'invention a ainsi pour objet, selon l'un de ses aspects, un réacteur échangeur, destiné à la mise en oeuvre de réactions catalytiques endothermiques ou exothermiques, comportant :

- un corps de réacteur,
- un circuit réactif comprenant une pluralité de canaux réactifs comprenant un catalyseur, éventuellement supporté par une structure monolithique catalytique,
- un circuit de fluide caloporteur pour refroidir les canaux réactifs, comprenant une pluralité de canaux caloporteurs,
- un élément distributeur de fluide caloporteur, situé en amont des canaux caloporteurs, et un élément collecteur de fluide caloporteur, situé en aval des canaux caloporteurs,

caractérisé en ce que l'élément distributeur de fluide caloporteur et/ou l'élément collecteur de fluide caloporteur comportent des moyens de modification de la distribution de fluide caloporteur respectivement vers les canaux caloporteurs et/ou depuis les canaux caloporteurs afin de modifier les caractéristiques thermiques du circuit de fluide caloporteur selon la revendication 1.

Dans toute la description, les termes « amont » et « aval » sont à comprendre par rapport au sens d'écoulement normal du fluide, de l'amont vers l'aval. Ainsi, dans le cas du fluide caloporteur, l'écoulement se fait depuis l'amont, au niveau de l'entrée des canaux caloporteurs, vers l'aval, au niveau de la sortie des canaux caloporteurs.

Les moyens de modification de la distribution de fluide caloporteur constituent des éléments modulables en fonction des caractéristiques thermiques souhaitées pour le fluide caloporteur. De cette façon, le réacteur échangeur selon l'invention est avantageusement un réacteur modulaire.

Grâce à l'invention, il est ainsi notamment possible de maximiser le taux de conversion d'un réacteur échangeur en fonction du vieillissement du catalyseur et/ou du débit de réactifs, sans pour autant modifier les conditions de température et de débit de fluide caloporteur. Les moyens de modification de la distribution de fluide caloporteur peuvent notamment permettre de s'adapter aux variations de la charge en réactifs.

Le réacteur échangeur selon l'invention peut en outre comporter l'une ou plusieurs des caractéristiques suivantes prises isolément ou suivant toutes combinaisons techniques possibles.

La redistribution de fluide caloporteur par le biais des moyens de modification se fait avantageusement sans modification du corps de réacteur.

Les moyens de modification de la distribution de fluide caloporteur comportent la modification de la ou des sections de passage du fluide caloporteur entre l'élément distributeur de fluide caloporteur, et/ou l'élément collecteur de fluide caloporteur, et les canaux caloporteurs, les moyens de modification de la distribution de fluide caloporteur comportent la modification de la disposition d'une ou plusieurs parois internes de l'élément distributeur de fluide caloporteur et/ou de l'élément collecteur de fluide caloporteur.

Cette modification de la disposition d'une ou de plusieurs parois internes de l'élément distributeur et/ou de l'élément collecteur de fluide caloporteur correspond avantageusement à une reconfiguration géométrique de l'élément distributeur et/ou de l'élément collecteur de fluide caloporteur, notamment par ajout, déplacement et/ou suppression d'une ou plusieurs parois internes.

La ou les parois internes sont avantageusement disposées transversalement par rapport à la longueur de l'élément distributeur de fluide caloporteur et/ou de l'élément collecteur de fluide caloporteur. Elles s'étendent ainsi sensiblement selon la direction longitudinale des canaux caloporteurs. La mise en place d'une ou plusieurs parois internes dans l'élément distributeur et/ou l'élément collecteur de fluide caloporteur permet avantageusement de compartimenter en plusieurs sous-éléments l'élément distributeur et/ou l'élément collecteur de fluide caloporteur.

L'élément distributeur de fluide caloporteur et/ou l'élément collecteur de fluide caloporteur peuvent comporter une ou plusieurs parois internes fixes.

L'élément distributeur de fluide caloporteur et/ou l'élément collecteur de fluide caloporteur peuvent encore comporter une ou plusieurs parois internes amovibles, l'élément distributeur de fluide caloporteur et/ou l'élément collecteur de fluide caloporteur comportant notamment un ou plusieurs emplacements pour la mise en place d'une ou plusieurs parois internes.

Par ailleurs, l'élément distributeur de fluide caloporteur et/ou l'élément collecteur de fluide caloporteur peuvent aussi comporter une ou plusieurs parois internes mobiles à l'intérieur de l'élément distributeur de fluide caloporteur et/ou de l'élément collecteur de fluide caloporteur, notamment par translation et/ou par rotation.

L'élément distributeur de fluide caloporteur et/ou l'élément collecteur de fluide caloporteur peuvent également comporter une ou plusieurs parois internes munies de vannes de réglage du débit de fluide caloporteur.

L'élément distributeur de fluide caloporteur et/ou l'élément collecteur de fluide caloporteur peuvent encore comporter au moins une première partie, formant un dispositif de contournement (ou « by-pass » en anglais), et une deuxième partie, comportant une pluralité de compartiments délimités par une ou plusieurs parois internes et située entre le corps de réacteur et la première partie, chaque compartiment de la deuxième partie étant relié à la première partie par le biais d'une vanne de réglage du débit de fluide caloporteur. Dans ce cas, le réacteur échangeur peut aussi comporter un élément de contournement reliant directement l'élément distributeur et l'élément collecteur de fluide caloporteur, éventuellement par le biais d'une ou plusieurs vannes de réglage du débit de fluide caloporteur.

Les canaux caloporteurs peuvent avantageusement être disposés de façon transverse par rapport aux canaux réactifs, les canaux réactifs s'étendant notamment longitudinalement et les canaux caloporteurs s'étendant notamment transversalement.

Le réacteur échangeur selon l'invention peut en outre comporter un élément distributeur de réactifs, situé en amont des canaux réactifs, et un élément collecteur de réactifs, situé en aval des canaux réactifs.

Comme indiqué précédemment, les termes « amont » et « aval » sont à comprendre par rapport au sens d'écoulement normal du fluide, de l'amont vers l'aval. Ainsi, dans le cas des réactifs, l'écoulement se fait depuis l'amont, au niveau de l'entrée des canaux réactifs, vers l'aval, au niveau de la sortie des canaux réactifs.

Les canaux réactifs peuvent par ailleurs comporter un catalyseur sous forme de grains. En variante, les canaux réactifs peuvent comporter un catalyseur supporté par une structure monolithique ou directement sur les parois des canaux.

Par ailleurs, le réacteur échangeur peut encore comporter au moins deux éléments distributeurs et/ou collecteurs distincts de fluide caloporteur, ou un élément distributeur et/ou collecteur de fluide caloporteur comprenant une ou plusieurs entrées et une ou plusieurs sorties de fluide caloporteur, afin de former au moins deux circuits distincts de fluide caloporteur.

Par ailleurs, l'invention a encore pour objet, selon un autre de ses aspects, un procédé d'adaptation du débit de fluide caloporteur d'un circuit de fluide caloporteur d'un réacteur échangeur tel que défini précédemment, caractérisé en ce qu'il comporte l'étape consistant à agir sur les moyens de modification de l'élément distributeur de fluide caloporteur et/ou de l'élément collecteur de fluide caloporteur pour modifier la distribution du fluide caloporteur respectivement vers les canaux caloporteurs et/ou depuis les canaux caloporteurs.

En particulier, le procédé peut comporter l'étape de modification, notamment par ajout, déplacement et/ou suppression, d'une ou de plusieurs parois internes de l'élément distributeur de fluide caloporteur et/ou de l'élément collecteur de fluide caloporteur pour modifier le débit de fluide caloporteur.

Le réacteur échangeur et le procédé selon l'invention peuvent comporter l'une quelconque des caractéristiques énoncées dans la description, prises isolément ou selon toutes combinaisons techniquement possibles avec d'autres caractéristiques.

## BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :

- les figures 1A et 1B illustrent, sous forme graphique, respectivement l'évolution de la température et l'évolution de la conversion de dioxyde de carbone ($CO_2$) en fonction de la position axiale verticale dans le réacteur, pour un cas (a) de catalyseur neuf et un cas (b) de catalyseur usagé,
- les figures 2A et 2B illustrent, sous forme graphique, respectivement l'évolution de la température optimale et l'évolution de la conversion de dioxyde de carbone ($CO_2$) en fonction de la position axiale vertical dans le réacteur, pour un cas (c) de catalyseur neuf avec un débit de réactifs de 5 NL/min et un cas (d) de catalyseur neuf avec un débit de réactifs de 10 NL/min,
- la figure 3 représente, partiellement et en perspective, un exemple de réalisation d'un réacteur échangeur conforme à l'invention,
- la figure 4 représente, en perspective, un exemple d'élément distributeur de gaz réactifs ou d'élément collecteur de gaz réactifs pour un réacteur échangeur conforme à l'invention,
- les figures 5A, 5B et 5C illustrent, en perspective, des exemples d'éléments distributeurs ou collecteurs pour un réacteur échangeur conforme à l'invention,
- les figures 6A, 6B, 6C et 6D illustrent graphiquement l'orientation des champs de vitesse obtenus pour un élément distributeur ou collecteur de fluide caloporteur d'un réacteur échangeur conforme à l'invention, respectivement pour le cas où il comporte une, deux, trois et quatre parois internes,
- les figures 7 et 8 illustrent, sous forme graphique, respectivement l'évolution de la température et l'évolution de la conversion de dioxyde de carbone ($CO_2$) en fonction de la position axiale dans le réacteur, pour un cas (e) d'utilisation d'un catalyseur neuf et pour un cas (f) d'un catalyseur dont l'activité est réduite de 75 % sur la première moitié d'un réacteur échangeur pour simuler un vieillissement avancé,
- les figures 9 et 10 illustrent, sous forme graphique, respectivement l'évolution de la température et l'évolution de la conversion de dioxyde de carbone ($CO_2$) en fonction de la position axiale dans le réacteur, pour un cas (e) d'utilisation d'un catalyseur neuf et pour un cas (f) d'un catalyseur dont l'activité est réduite de 75 % sur la première moitié d'un réacteur échangeur pour simuler un vieillissement avancé, lors de l'utilisation d'un élément distributeur et d'un élément collecteur munis de parois internes pour obtenir trois zones d'échanges thermiques différentes,
- les figures 11 et 12 illustrent, sous forme graphique, respectivement l'évolution de la température et l'évolution de la conversion de dioxyde de carbone ($CO_2$) en fonction de la position axiale dans le réacteur, pour un cas (g) d'utilisation de trois zones d'échange thermique, pour un cas (h) d'utilisation d'une seule zone d'échange thermique, pour un cas (i) d'utilisation d'une seule zone d'échange thermique différente, et pour un cas (j) d'utilisation d'une seule zone d'échange thermique encore différente,

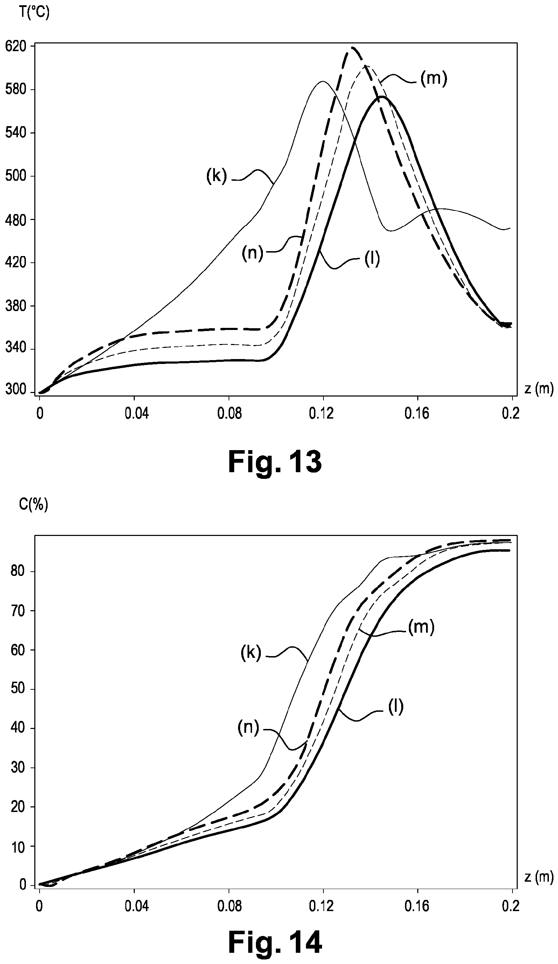

- les figures 13 et 14 illustrent, sous forme graphique, respectivement l'évolution de la température et l'évolution de la conversion de dioxyde de carbone ($CO_2$) en fonction de la position axiale dans le réacteur, pour un cas (k) d'utilisation de trois zones d'échange thermique, pour un cas (l) d'utilisation d'une seule zone d'échange thermique avec une température du fluide caloporteur de 300 °C, pour un cas (m) d'utilisation d'une seule zone d'échange thermique avec une température du fluide caloporteur de 310 °C, et pour un cas (n) d'utilisation d'une seule zone d'échange thermique avec une température du fluide caloporteur de 320 °C,

- les figures 15 et 16 représentent, en perspective, des exemples d'éléments distributeurs 6 ou collecteurs 7 munis de parois internes pour un réacteur échangeur conforme à l'invention,
- les figures 17, 18 et 19 représentent trois exemples de configurations de réacteurs échangeurs conformes à l'invention, avec utilisation d'un élément distributeur et/ou d'un élément collecteur de fluide caloporteur comportant des parois internes, et
- les figures 20 et 21 représentent, en coupe simplifiée, deux autres exemples de configurations de réacteurs échangeurs conformes à l'invention, avec utilisation de deux circuits de fluide caloporteur distincts.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

Les figures 1A-1B et 2A-2B ont déjà été décrites précédemment dans la partie relative à l'état de la technique antérieure.

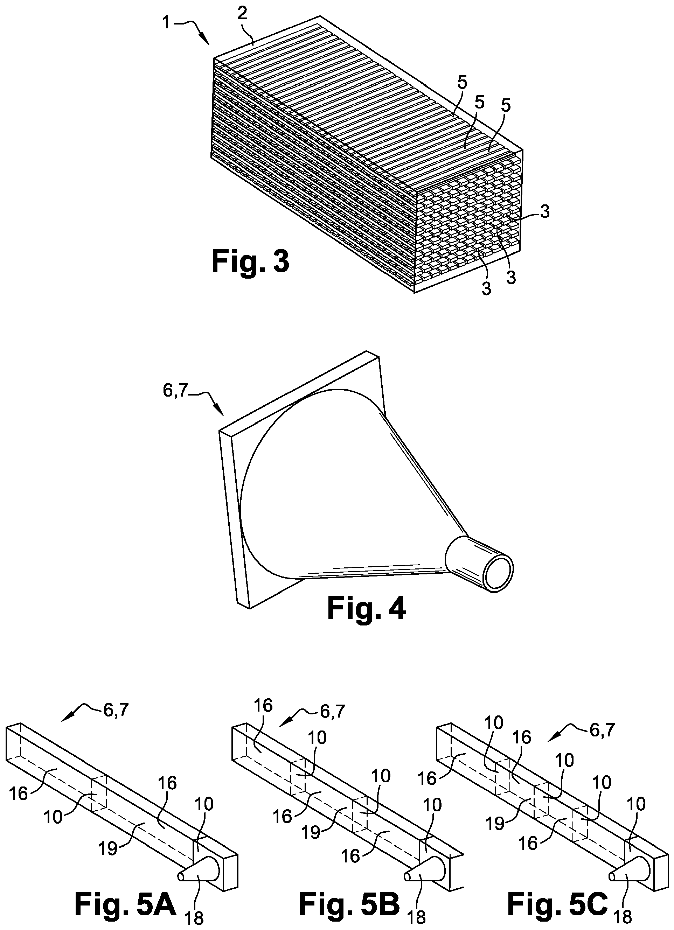

En référence à la figure 3, on a représenté, partiellement et en perspective, un exemple de réalisation d'un réacteur échangeur 1 conforme à l'invention.

Le réacteur échangeur 1 est tout particulièrement destiné à la mise en oeuvre de réactions catalytiques endothermiques ou exothermiques.

Il comporte un corps de réacteur 2 sous la forme d'un bloc, dans lequel sont situés un circuit réactif comprenant une pluralité de canaux réactifs 3, et un circuit de fluide caloporteur pour refroidir les canaux réactifs 3, comprenant une pluralité de canaux caloporteurs 5.

Les canaux caloporteurs 5 sont orientés de façon transverse par rapport aux canaux réactifs 3. Le nombre, les dimensions et les longueurs des canaux réactifs 3 et des canaux caloporteurs 5 dépendent des applications visées pour le réacteur échangeur 1.

Selon une première configuration du réacteur échangeur 1, les canaux réactifs 3 de dimension centimétrique, par exemple de l'ordre de 1 cm x 0,5 cm en section, sont remplis de catalyseur sous forme de poudre ou de granulats formant un lit fixe. Un dispositif permettant de retenir le catalyseur dans les canaux réactifs 3 est alors mis en place, par exemple une grille ou un fritté.

Selon une deuxième configuration du réacteur échangeur 1, les canaux réactifs 3 de dimension centimétrique, par exemple de l'ordre de 2 cm x 1 cm en section, contiennent une structure monolithique catalytique, par exemple une mousse ou un nid d'abeilles, revêtue d'une fine couche de catalyseur. Le catalyseur adhère alors la structure monolithique catalytique et ne nécessite pas de dispositif spécifique. Cependant, la résistance thermique entre la structure monolithique catalytique et le réacteur échangeur 1 doit être minimisée, ce qui peut être obtenu par un ajustage fin, un frettage (réduction du jeu sous l'effet de dilatations différentielles), un brasage ou l'ajout d'une pièce rapportée se conformant aux jeux.

Selon une troisième configuration du réacteur échangeur 1, les parois des canaux réactifs 3 de dimension millimétrique, par exemple de l'ordre de 2 mm x 0,5 mm en section, sont directement revêtues de catalyseur.

Enfin, selon une quatrième configuration dédiée aux réactions homogènes, les canaux réactifs 3 peuvent être nus, sans catalyseur.

Le corps de réacteur 2 sous forme de bloc peut être obtenu par l'une des méthodes connues de l'Homme du métier, telles que l'assemblage par soudage ou vissage de plaques usinées, ou par l'usinage direct des canaux réactifs 3 et des canaux caloporteurs 5 dans la masse.

Par ailleurs, le réacteur échangeur 1 comporte un élément distributeur 8 de gaz réactifs, situé en amont des canaux réactifs 3, pour l'alimentation en gaz réactifs du réacteur échangeur 1 et un élément collecteur 9 de gaz réactifs, situé en aval des canaux réactifs 3.

Un tel exemple d'élément distributeur 8 ou collecteur 9 de gaz réactifs est représenté, en perspective, sur la figure 4. La fixation sur le corps de réacteur 2 peut par exemple se faire par soudure ou vissage. Comme on peut le voir sur cette figure 4, l'élément distributeur 8 ou collecteur 9 de gaz réactifs peut présenter une forme de cône.

Par ailleurs, le réacteur échangeur 1 comporte encore un élément distributeur 6 de fluide caloporteur, situé en amont des canaux caloporteurs 5, et un élément collecteur 7 de fluide caloporteur, situé en aval des canaux caloporteurs 5.

Les figures 5A, 5B et 5C illustrent, en perspective, de tels exemples d'éléments distributeurs 6 ou collecteurs 7 pour un réacteur échangeur 1 conforme à l'invention.

Conformément à l'invention, chaque élément distributeur 6 de fluide caloporteur et/ou chaque élément collecteur 7 de fluide caloporteur comportent des moyens de modification 10 de la distribution de fluide caloporteur respectivement vers les canaux caloporteurs 5 et/ou depuis les canaux caloporteurs 5 afin de modifier les caractéristiques thermiques du circuit de fluide caloporteur.

Dans cet exemple, les moyens de modification 10 de la distribution de fluide caloporteur comportent la modification de la disposition d'une ou plusieurs parois internes 10 de l'élément distributeur 6 de fluide caloporteur et/ou de l'élément collecteur 7 de fluide caloporteur.

La figure 5A présente une configuration dans laquelle l'élément distributeur 6 ou collecteur 7 comporte deux parois internes 10. La figure 5B présente une configuration dans laquelle l'élément distributeur 6 ou collecteur 7 comporte trois parois internes 10. Enfin, la figure 5C présente une configuration dans laquelle l'élément distributeur 6 ou collecteur 7 comporte quatre parois internes 10. En combinant deux à deux ces différentes configurations, il est possible d'obtenir de nombreuses configurations, pour lesquelles le nombre de passages et la vitesse du fluide caloporteur peuvent varier typiquement d'un facteur de 1 à 10 alors que le débit total de fluide caloporteur reste constant.

L'élément distributeur 6 et l'élément collecteur 7 de fluide caloporteur du réacteur échangeur 1 sont disposés latéralement sur le corps de réacteur 2 sous forme de bloc. Ils peuvent être assemblés au corps de réacteur 2 par l'intermédiaire d'un système démontable, par exemple du type visserie, assurant l'étanchéité du circuit de fluide caloporteur, par exemple par utilisation d'un joint plat ou torique.

Chaque élément distributeur 6 ou collecteur 7 comporte une tubulure d'entrée ou de sortie 18, et une paroi externe 19. Par ailleurs, la pluralité de parois internes 10 permet de former des compartiments 16 de passage du fluide caloporteur après assemblage sur le corps de réacteur 2.

Selon le nombre de parois internes 10 en place, le circuit de fluide caloporteur aura une longueur développée plus ou moins importante, et une section de passage différente. Cette dernière caractéristique est utilisée pour optimiser le refroidissement en fonction des conditions opératoires.

On va maintenant étudier ci-après l'effet du nombre de parois internes 10 dans un élément distributeur 6 ou un élément collecteur 7 de fluide caloporteur sur le refroidissement obtenu des canaux réactifs 3.

Le nombre de Nusselt Nu, qui est le rapport de la quantité de chaleur échangée par convection à celle échangée par conduction permet de caractériser l'intensité de l'échange thermique. Il s'exprime de la manière suivante :

$$Nu = (hD)/k,$$

où :

- h représente le coefficient d'échange thermique (en $W/m^2/K$),
- D représente le diamètre du tube (en m), et
- k représente la conductivité du fluide caloporteur (en W/m/K).

Ainsi, par exemple, dans le cas d'une conduite cylindrique en écoulement turbulent établi, le nombre de Nusselt Nu est donné par la corrélation de Colburn, à savoir :

$$Nu = 0,023 \times Re^{0,8} \times Pr^{0,33},$$

où :

- Pr est le nombre de Prandtl, et
- Re est le nombre de Reynolds,

avec

$$Re = (\rho VD)/\mu,$$

où :

- $\rho$ est la masse volumique (en $kg/m^3$),
- V est la vitesse (en m/s), et
- $\mu$ est la viscosité dynamique du fluide caloporteur (en kg/m/s).

Ainsi, en réduisant le nombre de canaux de passage du fluide caloporteur, et donc la section de passage du fluide, la vitesse du fluide caloporteur augmente proportionnellement, conduisant à une augmentation du nombre de Reynolds Re, du nombre de Nusselt Nu et du coefficient d'échange thermique h.

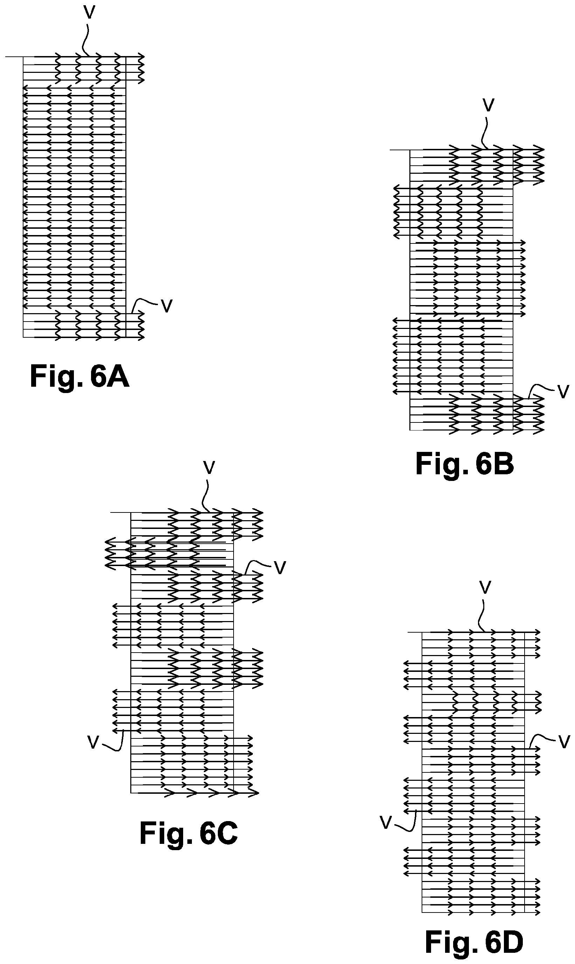

Les figures 6A, 6B, 6C et 6D illustrent l'orientation des champs de vitesse V obtenus pour un élément distributeur 6 ou collecteur 7 de fluide caloporteur, respectivement pour le cas où il comporte une, deux, trois et quatre parois internes 10. Sur ces figures 6A-6D, les flèches ne sont pas à l'échelle.

Il est possible d'illustrer le gain obtenu avec la présence de parois internes 10 dans l'élément distributeur 6 ou collecteur 7, selon le principe de l'invention, en comparant la configuration de la figure 6A avec la présence d'une seule paroi interne 10 et la configuration de la figure 6D avec la présence de quatre parois internes 10, sur un cas simple où un flux thermique constant est appliqué sur la face supérieure, simulant ainsi une réaction exothermique.

Ainsi, pour un débit de fluide caloporteur de 1 NL/min, une température en entrée de fluide caloporteur de 270°C et un flux surfacique de 750 W/m$^2$ appliqué sur une face de 20 cm x 5 cm, on peut obtenir un nombre de Nusselt Nu allant de 3,6 à 20, et une température maximale variant de 301°C à 286°C comme le montre le tableau ci-après.

Sur ce tableau, on compare le refroidissement obtenu pour les deux configurations avec une seule paroi interne 10 et avec quatre parois internes 10.

| Configuration | Géométrie du réacteur échangeur | Vitesse de la zone courante | Nombre de Reynolds dans la zone courante | Nombre de Nusselt dans la zone courante | Température maximale de la plaque | Température maximale du fluide caloporteur | Perte de charge |
|---|---|---|---|---|---|---|---|
| une paroi interne | 3 zones : 4, 29, 4 canaux réactifs de 2 mm de diamètre | 0,14 m/s | 145 | 3,6 | 301°C | 272,5°C | 40 mbar |
| quatre parois internes | 9 zones de 4, 4, 4, 4, 5, 4, 4, 4, 4 canaux réactifs de 2 mm de diamètre | 1,25 m/s | 1250 | 20 | 286°C | 272,5°C | 170 mbar |

Ainsi, il est possible de contrôler la température de la face extérieure dans une plage de 15°C sans modifier le débit de fluide caloporteur, ni la température d'entrée du fluide caloporteur.

Cette caractéristique peut être utilisée pour obtenir une conversion maximale au sein d'un réacteur échangeur 1 en approchant la température optimale de la réaction par le contrôle des échanges thermiques entre le fluide caloporteur et la paroi du réacteur échangeur 1. Ainsi, il peut être possible d'obtenir une température élevée du catalyseur lorsque cela est nécessaire, notamment en entrée du réacteur échangeur 1, afin d'obtenir une activation thermique de la réaction, et une température plus basse en sortie du réacteur échangeur 1, afin de se placer dans des conditions thermodynamiques favorables, ou encore de mieux contrôler la température maximale du réacteur échangeur 1 en augmentant les échanges thermiques là où la réaction est la plus exothermique.

On va maintenant étudier ci-après l'effet du nombre de parois internes 10 de l'élément distributeur 6 ou collecteur 7 de fluide caloporteur sur la conversion au sein du réacteur échangeur 1.

Pour illustrer l'amélioration qu'apporte l'invention sur la conversion en sortie du réacteur échangeur 1, on étudie la simulation d'un canal réactif 3 de section égale à 5 mm x 40 mm et de longueur égale à 200 mm. Ce canal réactif 3 contient un catalyseur de nickel-alumine sous forme de grains de 500 $\mu$m, et il est alimenté par un mélange à 5 bars d'un débit de 5 NL/min de réactifs de composition molaire égale à 80 % d'hydrogène ($H_2$) et 20 % de dioxyde de carbone ($CO_2$).

Le refroidissement par les canaux caloporteur 5 est modélisé par un coefficient d'échange et une température extérieure.

La réaction chimique simulée est celle de méthanation du dioxyde de carbone ($CO_2$), à savoir : $CO_2 + 4H_2 \Leftrightarrow CH_4 + 2H_2O$, qui est fortement exothermique et présente une enthalpie de réaction $\Delta_r H_{298K}$ de -165 kJ/mol.

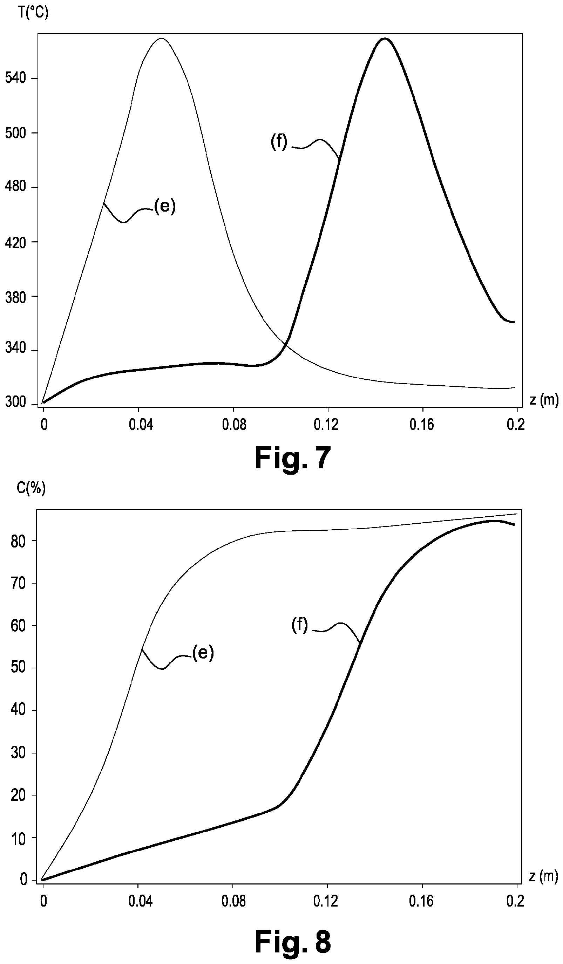

Les figures 7 et 8 sont des graphiques représentant respectivement l'évolution de la température T, exprimée en degrés Celsius, et la conversion C en dioxyde de carbone, exprimée en pourcentages, en fonction de la position axiale z, exprimée en mètres, dans le réacteur le long du canal réactif 3, pour un cas (e) d'utilisation d'un catalyseur neuf et pour un cas (f) d'un catalyseur dont l'activité est réduite de 75 % sur la première moitié du réacteur échangeur 1 pour simuler un vieillissement avancé. Sur ces deux graphiques des figures 7 et 8, le coefficient d'échange thermique h est égal à 500 W/m$^2$/K et que la température externe est constante, égale à 300°C.

Ainsi, le vieillissement du catalyseur se traduit par un déplacement du pic de température vers l'aval du réacteur échangeur 1 et une baisse de la conversion.

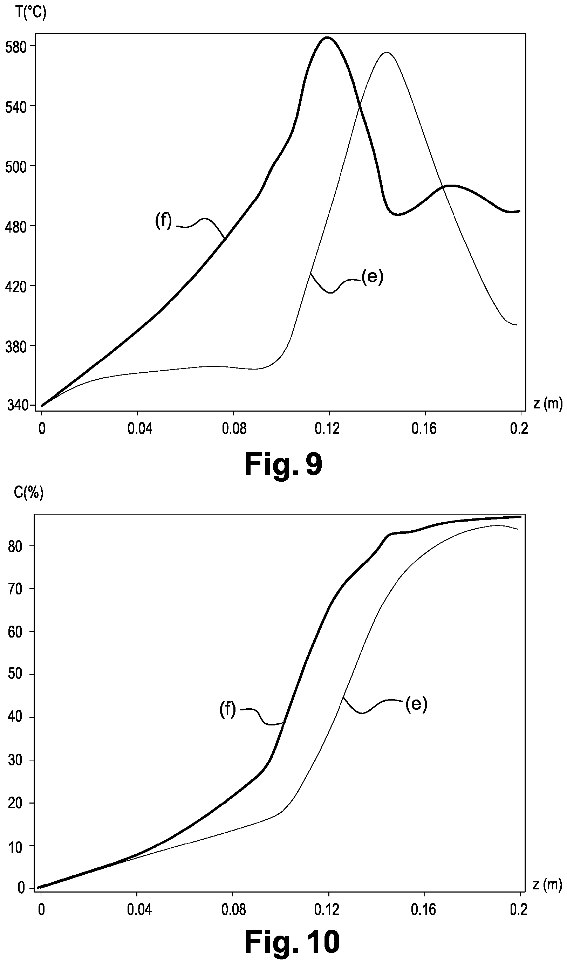

Par ailleurs, si l'on modifie la configuration de l'élément distributeur 6 et de l'élément collecteur 7 par le biais de parois internes 10 pour obtenir trois zones d'échanges thermiques différentes, par exemple une première zone de 10 cm à faible échange (par exemple avec h égal à 50 W/m$^2$/K), une zone centrale de 5 cm à fort échange (par exemple avec h égal à 1000 W/m$^2$/K), et enfin une troisième zone de 5 cm à faible échange (par exemple avec h égal à 50 W/m$^2$/K), il est possible de mieux contrôler la température du catalyseur et donc d'augmenter significativement la conversion, comme il résulte des graphiques des figures 9 et 10 obtenues dans les mêmes conditions que celles des figures 7 et 8 après la mise en place des trois zones d'échange.

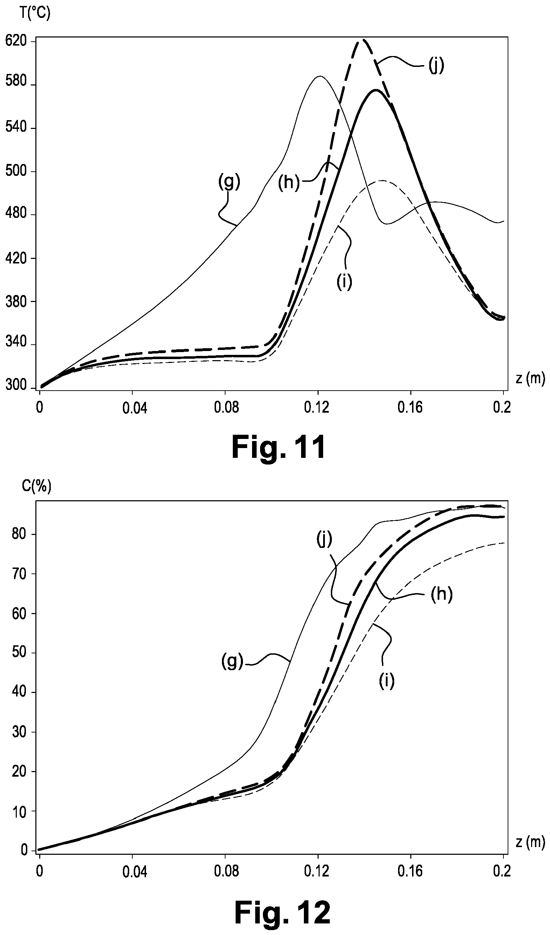

Il est à noter que la modification des zones d'échange thermique apporte une amélioration par rapport à la solution connue qui est d'augmenter la température ou le débit du fluide de caloporteur. En effet, si l'on diminue le débit du fluide caloporteur pour diminuer le coefficient d'échange thermique h, de 500 à 350 W/m$^2$/K, on obtient bien une augmentation de la conversion mais au prix d'une élévation, de près de 30°C, plus importante de la température maximale de catalyseur par rapport à la mise en place de plusieurs zones d'échange, comme le montrent les graphiques des figures 11 et 12 qui représentent respectivement l'évolution de la température T, exprimée en degrés Celsius, et la conversion C en dioxyde de carbone, exprimée en pourcentages, en fonction de la position axiale z, exprimée en mètres, dans le réacteur le long du canal réactif 3, pour un cas (g) d'utilisation de trois zones d'échange thermique correspondant aux trois coefficients d'échange thermique 50, 1000 et 50 W/m$^2$/K, pour un cas (h) d'utilisation d'une seule zone d'échange thermique avec h égal à 500 W/m$^2$/K, pour un cas (i) d'utilisation d'une seule zone d'échange thermique avec h égal à 1000 W/m$^2$/K, et pour un cas (j) d'utilisation d'une seule zone d'échange thermique avec h égal à 350 W/m$^2$/K.

De la même façon, si l'on augmente la température du fluide caloporteur, à savoir de 300 à 320 °C, on obtient bien une augmentation de la conversion mais au prix d'une élévation, de près de 30°C, plus importante de la température maximale du fluide caloporteur par rapport à la mise en place de plusieurs zones d'échange thermique, comme le montrent les graphiques des figures 13 et 14 qui représentent respectivement l'évolution de la température T, exprimée en degrés Celsius, et la conversion C en dioxyde de carbone, exprimée en pourcentages, en fonction de la position axiale z, exprimée en mètres, dans le réacteur le long du canal réactif 3, pour un cas (k) d'utilisation de trois zones d'échange thermique correspondant aux trois coefficients d'échange thermique 50, 1000 et 50 W/m$^2$/K, pour un cas (l) d'utilisation d'une seule zone d'échange thermique avec h égal à 500 W/m$^2$/K et une température du fluide caloporteur de 300 °C, pour un cas (m) d'utilisation d'une seule zone d'échange thermique avec h égal à 500 W/m$^2$/K et une température du fluide caloporteur de 310 °C, et pour un cas (n) d'utilisation d'une seule zone d'échange thermique avec h égal à 500 W/m$^2$/K et une température du fluide caloporteur de 320 °C.

Par conséquent, de façon avantageuse, les modifications des débits de fluide caloporteur par la présence de plusieurs parois internes 10 dans l'élément distributeur 6 et/ou l'élément collecteur 7 de fluide caloporteur permettent d'augmenter la conversion du réacteur échangeur 1, par une simple modification de la configuration des éléments distributeur 6 et/ou collecteur 7, sans modifier les conditions de fonctionnement, comme par exemple la pression, le débit total de fluide caloporteur ou encore la température du fluide caloporteur. Ceci est particulièrement intéressant lorsque ces conditions ne peuvent pas être modifiées sans dégrader les performances générales du réacteur échangeur 1 ou du procédé dans son ensemble, par exemple dans le cas d'intégrations thermiques entre plusieurs composants du procédé.

Le passage d'une configuration à l'autre des éléments distributeur 6 et/ou collecteur 7 peut se faire en les remplaçant ou en modifiant l'orientation et/ou la position des parois internes 10.

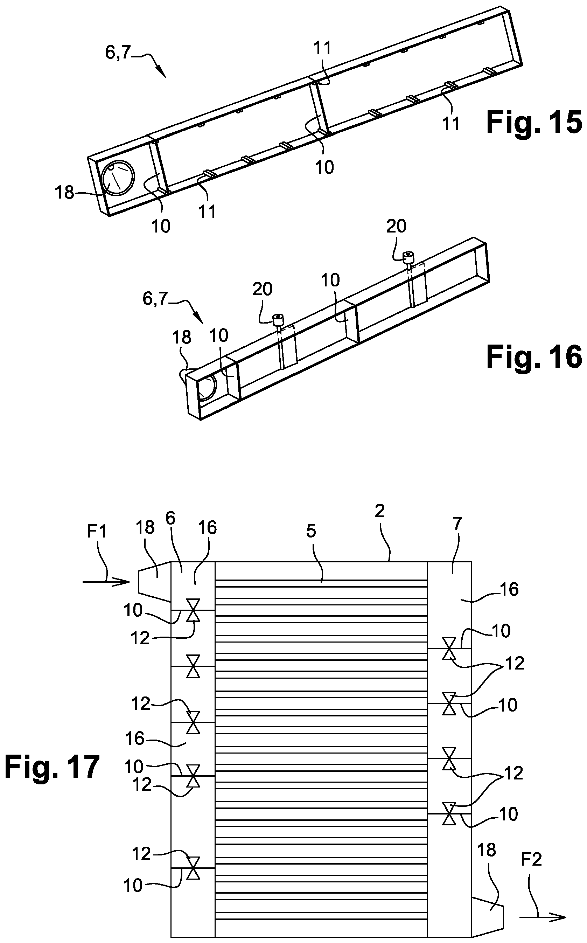

On va maintenant décrire ci-après différentes configurations possibles des éléments distributeur 6 ou collecteur 7 en référence aux figures 15 à 19. Plus précisément, les figures 15 et 16 représentent, en perspective, des possibilités de configuration d'un élément distributeur 6 ou collecteur 7, et les figures 17, 18 et 19 représentent, en coupe simplifiée, des possibilités de configuration d'éléments distributeur 6 et collecteur 7 en place sur un réacteur échangeur 1 conforme à l'invention.

Les éléments distributeur 6 et/ou collecteur 7 d'un réacteur échangeur 1 conforme à l'invention ont ainsi la particularité d'être configurables, leur configuration pouvant se faire des manières décrites ci-après.

Tout d'abord, l'élément distributeur 6 de fluide caloporteur et/ou l'élément collecteur 7 de fluide caloporteur peuvent comporter une ou plusieurs parois internes 10 fixes. Dans ce cas, la configuration nécessite l'arrêt du réacteur échangeur 1, la vidange du circuit de caloporteur, puis le démontage des éléments collecteur 7 et distributeur 6 et leur remplacement par de nouveaux éléments collecteur 7 et distributeur 6.

En référence à la figure 15, il est également possible de prévoir que l'élément distributeur 6 de fluide caloporteur et/ou l'élément collecteur 7 de fluide caloporteur comportent des parois internes 10 amovibles. Dans ce cas, l'élément distributeur 6 de fluide caloporteur et/ou l'élément collecteur 7 de fluide caloporteur comportent des emplacements 11 pour la mise en place des parois internes 10. Les parois internes 10 peuvent être ajoutées ou enlevées selon les besoins.

En outre, en référence à la figure 16, il est également possible de prévoir que l'élément distributeur 6 de fluide caloporteur et/ou l'élément collecteur 7 de fluide caloporteur comportent des parois internes 10 mobiles à l'intérieur de l'élément distributeur 6 de fluide caloporteur et/ou de l'élément collecteur 7 de fluide caloporteur.

Ces parois internes 10 mobiles peuvent être déplacées par le biais de leviers 20 pour le déplacement en rotation et/ou en translation des parois internes 10, et notamment en translation par coulissement dans l'exemple de la figure 16. Le nombre de parois internes 10 peut être fixe et leur déplacement permet d'occulter plus ou moins le passage du fluide caloporteur. Ceci peut éventuellement être réalisé sans nécessité de prévoir le démontage de l'élément distributeur 6 et/ou de l'élément collecteur 7.

Le déplacement des parois internes 10 peut être manuel, comme pour l'exemple de la figure 16, ou automatisé, par exemple par commande électrique et/ou pneumatique.

En référence à la figure 17, il est également possible de prévoir que l'élément distributeur 6 de fluide caloporteur et/ou l'élément collecteur 7 de fluide caloporteur comportent des parois internes 10 munies de vannes de réglage 12 du débit de fluide caloporteur. Sur cette figure 17 sont par ailleurs respectivement symbolisées par les flèches F1 et F2 l'entrée de fluide caloporteur et la sortie de fluide caloporteur.

Selon cette configuration, l'élément distributeur 6 et l'élément collecteur 7 comportent un nombre fixe de compartiments 16, chacun étant relié au compartiment adjacent par une vanne de réglage 12 jouant le même rôle qu'une paroi interne 10 mobile, c'est-à-dire qui introduit une perte de charge réglable, capable de changer la distribution des débits de fluide caloporteur entre les canaux.

Il est également possible de combiner les différentes configurations présentées ici, et par exemple de combiner l'utilisation de parois internes 10 fixes, amovibles et/ou mobiles.

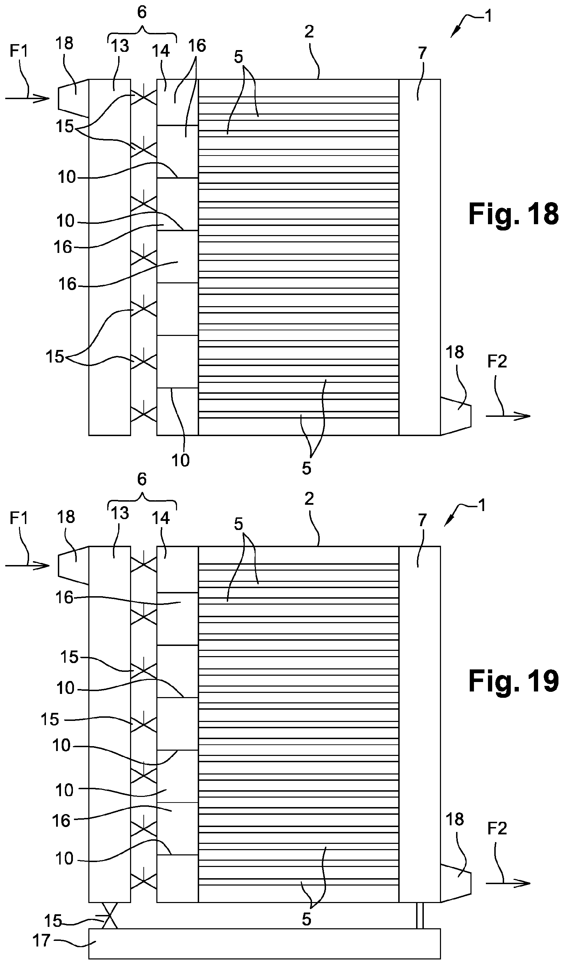

En référence maintenant à la figure 18, on a représenté la possibilité consistant à ce que l'élément distributeur 6 de fluide caloporteur comporte une première partie 13, formant un dispositif de contournement, et une deuxième partie 14, comportant une pluralité de compartiments 16 délimités par des parois internes 10, cette deuxième partie 14 étant située entre le corps de réacteur 2 et la première partie 13. Chaque compartiment 16 de la deuxième partie 14 est de plus relié à la première partie 13 par le biais d'une vanne de réglage 15 du débit de fluide caloporteur.

Autrement dit, cette configuration illustre la possibilité d'avoir un contournement 13 (ou « by-pass » en anglais), auquel les compartiments 16 sont reliés par des vanne de réglage 15, par exemple du type d'une vanne à tiroir, d'une vanne sphérique ou d'une vanne à soupape, entre autres.

Dans cette configuration, les vannes 15 peuvent être placées sur l'élément distributeur 6 seulement (comme représenté), sur l'élément collecteur 7 seulement ou encore pour partie sur l'élément distributeur 6 et pour partie sur l'élément collecteur 7.

Enfin, en référence à la figure 19, on illustre la possibilité d'avoir, en plus des éléments de l'exemple de la figure 18, un élément de contournement 17 reliant directement l'élément distributeur 6 et l'élément collecteur 7 de fluide caloporteur, par le biais d'une vanne de réglage 15 du débit de fluide caloporteur pour l'élément distributeur 6 et directement pour l'élément collecteur 7.

Autrement dit, cette configuration illustre la possibilité d'avoir deux solutions de contournement 13 et 17 (soit deux « by-pass » en anglais). Un avantage de cette configuration est que si le débit de fluide caloporteur dans le contournement total formé par le dispositif de contournement 13 associé à l'élément de contournement 17 est suffisant, le réglage du débit dans un groupe de canaux influencera moins l'écoulement dans les autres groupes de canaux.

Les différentes configurations présentées ci-dessus peuvent être choisies en fonction des applications visées pour le réacteur échangeur 1. Dans tous les cas, il est préféré d'instrumenter les canaux réactifs 3 par des mesures de température, par exemple par l'insertion de thermocouples, afin de connaître l'évolution de température dans le réacteur échangeur 1 au cours du temps.

Lorsque les canaux réactifs 3 sont instrumentés, il est avantageux de modifier l'ouverture des vannes de réglages 15 en fonction de la température maximale dans chaque groupe de canaux instrumentées. Cette modification peut être automatisée ou manuelle.

Par ailleurs, pour chacune des configurations décrites auparavant, le procédé selon l'invention d'adaptation du débit de fluide caloporteur du circuit de fluide caloporteur du réacteur échangeur 1 peut être mis en oeuvre par l'étape consistant à agir sur les parois internes 10 de l'élément distributeur 6 de fluide caloporteur et/ou de l'élément collecteur 7 de fluide caloporteur pour modifier la distribution du fluide caloporteur respectivement vers les canaux caloporteurs 5 et/ou depuis les canaux caloporteurs 5, notamment par ajout, déplacement et/ou suppression des parois internes 10.

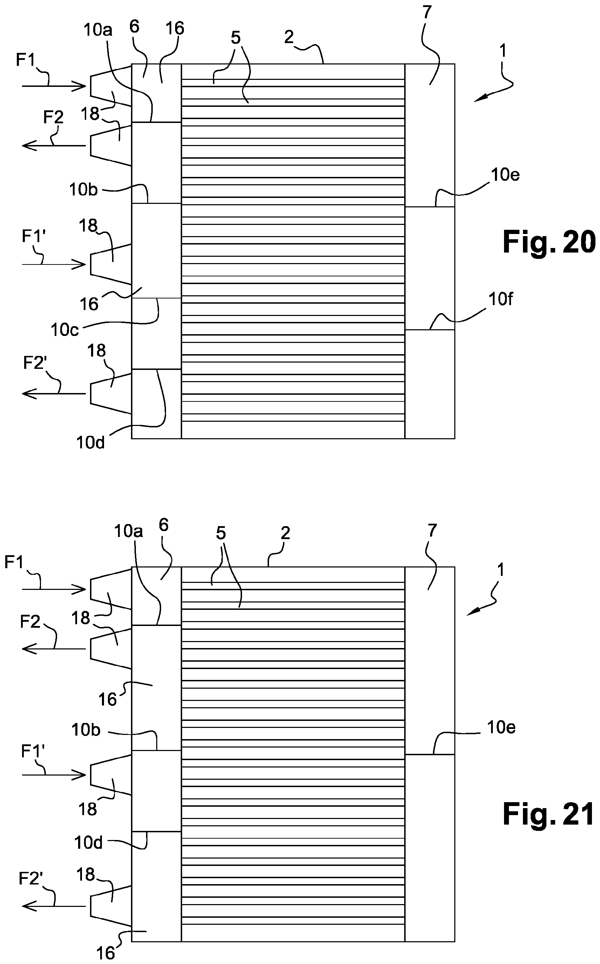

Les configurations décrites auparavant peuvent bien entendu être étendues au cas où plusieurs circuits de fluide caloporteur distincts sont utilisés, comme l'illustrent en coupe simplifiée les réacteurs échangeurs 1 des figures 20 et 21.

En effet, l'utilisation de plusieurs circuits de fluide caloporteur à des températures différentes peut permettre d'approcher la température optimale du réacteur échangeur 1 plus facilement qu'avec un seul circuit de fluide caloporteur.

Le principe reste le même, c'est-à-dire que le réacteur échangeur 1 comporte un corps de réacteur 2 comprenant les canaux réactifs 3 et les canaux caloporteurs 5, préférentiellement disposés de façon perpendiculaire par rapport aux canaux réactifs 3. L'arrivée et le départ des circuits de fluide caloporteur peuvent se faire sur plusieurs éléments distributeurs et/ou collecteurs distincts, ou bien encore sur un seul élément distributeur 6 et/ou collecteur 7 comprenant plusieurs entrées F1, F1' et plusieurs sorties F2, F2', comme représenté sur les figures 20 et 21.

Plus particulièrement, la figure 20 illustre le cas d'une configuration à deux circuits de fluide caloporteur distincts, par l'utilisation d'un élément distributeur 6 comprenant deux entrées F1, F1' et deux sorties F2, F2' de fluide caloporteur. L'élément distributeur 6 comporte des parois internes 10a-10d et l'élément collecteur 7 comporte des parois internes 10e et 10f.

Comme dans les cas où un seul circuit de fluide caloporteur est utilisé, il est possible de modifier la configuration des éléments collecteur 7 et distributeur 6, sans modifier le corps de réacteur 2, en déplaçant les parois internes 10a-10f.

Sur la figure 21 est ainsi illustrée une modification des éléments collecteur 7 et distributeur 6 de l'exemple de la figure 20 pour permettre d'étendre la première zone de refroidissement et de raccourcir la seconde zone de refroidissement, par déplacement des parois internes 10b, 10d et 10e. De plus, sur cette figure 21, est illustrée une façon de modifier la topologie de la seconde zone de refroidissement pour n'obtenir qu'un seul retournement, au lieu de trois retournements sur l'exemple de la figure 20, en escamotant les parois internes 10c et 10f. Une telle modification peut par exemple être obtenue en démontant les éléments collecteur 7 et distributeur 6 pour déplacer les parois internes, ou sans démontage par translation des parois internes 10b, 10d et 10e et par escamotage des parois internes 10c et 10f.

**Revendications**

1. Réacteur échangeur (1), destiné à la mise en oeuvre de réactions catalytiques endothermiques ou exothermiques, comportant :

   - un corps de réacteur (2),
   - un circuit réactif comprenant une pluralité de canaux réactifs (3) comprenant un catalyseur, éventuellement supporté par une structure monolithique catalytique,
   - un circuit de fluide caloporteur pour refroidir les canaux réactifs (3), comprenant une pluralité de canaux caloporteurs (5),
   - un élément distributeur (6) de fluide caloporteur, situé en amont des canaux caloporteurs (5), et un élément collecteur (7) de fluide caloporteur, situé en aval des canaux caloporteurs (5),

   **caractérisé en ce que** l'élément distributeur (6) de fluide caloporteur et/ou l'élément collecteur (7) de fluide caloporteur comportent des moyens de modification (10) de la distribution de fluide caloporteur respectivement vers les canaux caloporteurs (5) et/ou depuis les canaux caloporteurs (5) afin de modifier les caractéristiques thermiques du circuit de fluide caloporteur, lesdits moyens de modification de la distribution de fluide caloporteur comportant la modification de la ou des sections de passage du fluide caloporteur entre l'élément distributeur (6) de fluide caloporteur, et/ou l'élément collecteur (7) de fluide caloporteur, et les canaux caloporteurs (5), par la modification de la disposition d'une ou plusieurs parois internes (10) de l'élément distributeur (6) de fluide caloporteur et/ou de l'élément collecteur (7) de fluide caloporteur.

2. Réacteur échangeur selon la revendication 1, **caractérisé en ce que** l'élément distributeur (6) de fluide caloporteur et/ou l'élément collecteur (7) de fluide caloporteur comportent une ou plusieurs parois internes (10) fixes.

3. Réacteur échangeur selon la revendication 1 ou 2, **caractérisé en ce que** l'élément distributeur (6) de fluide caloporteur et/ou l'élément collecteur (7) de fluide caloporteur comportent une ou plusieurs parois internes (10) amovibles, l'élément distributeur (6) de fluide caloporteur et/ou l'élément collecteur (7) de fluide caloporteur comportant notamment un ou plusieurs emplacements (11) pour la mise en place d'une ou plusieurs parois internes (10).

4. Réacteur échangeur selon l'une des revendications 1 à 3, **caractérisé en ce que** l'élément distributeur (6) de fluide caloporteur et/ou l'élément collecteur (7) de fluide caloporteur comportent une ou plusieurs parois internes (10) mobiles à l'intérieur de l'élément distributeur (6) de fluide caloporteur et/ou de l'élément collecteur (7) de fluide caloporteur, notamment par translation et/ou par rotation.

5. Réacteur échangeur selon l'une quelconque des revendications 1 à 4, **caractérisé en ce que** l'élément distributeur (6) de fluide caloporteur et/ou l'élément collecteur (7) de fluide caloporteur comportent une ou plusieurs parois internes (10) munies de vannes de réglage (12) du débit de fluide caloporteur.

**6.** Réacteur échangeur selon l'une quelconque des revendications 1 à 5, **caractérisé en ce que** l'élément distributeur (6) de fluide caloporteur et/ou l'élément collecteur (7) de fluide caloporteur comportent au moins une première partie (13), formant un dispositif de contournement, et une deuxième partie (14), comportant une pluralité de compartiments (16) délimités par une ou plusieurs parois internes (10) et située entre le corps de réacteur (2) et la première partie (13), chaque compartiment (16) de la deuxième partie (14) étant relié à la première partie (13) par le biais d'une vanne de réglage (15) du débit de fluide caloporteur.

**7.** Réacteur échangeur selon la revendication 6, **caractérisé en ce qu'**il comporte un élément de contournement (17) reliant directement l'élément distributeur (6) et l'élément collecteur (7) de fluide caloporteur, éventuellement par le biais d'une ou plusieurs vannes de réglage (15) du débit de fluide caloporteur.

**8.** Réacteur échangeur selon l'une quelconque des revendications précédentes, **caractérisé en ce que** les canaux caloporteurs (5) sont disposés de façon transverse par rapport aux canaux réactifs (3), les canaux réactifs (3) s'étendant notamment longitudinalement et les canaux caloporteurs (5) s'étendant notamment transversalement.

**9.** Réacteur échangeur selon l'une quelconque des revendications précédentes, **caractérisé en ce qu'**il comporte un élément distributeur (8) de réactifs, situé en amont des canaux réactifs (3), et un élément collecteur (9) de réactifs, situé en aval des canaux réactifs (3).

**10.** Réacteur échangeur selon l'une quelconque des revendications précédentes, **caractérisé en ce que** les canaux réactifs (3) comportent un catalyseur sous forme de grains.

**11.** Réacteur échangeur selon l'une quelconque des revendications 1 à 9, **caractérisé en ce que** les canaux réactifs (3) comportent un catalyseur supporté par une structure monolithique catalytique.

**12.** Réacteur échangeur selon l'une quelconque des revendications précédentes, **caractérisé en ce qu'**il comporte au moins deux éléments distributeurs et/ou collecteurs distincts de fluide caloporteur, ou un élément distributeur (6) et/ou collecteur (7) de fluide caloporteur comprenant une ou plusieurs entrées (F1, F1') et une ou plusieurs sorties (F2, F2') de fluide caloporteur, afin de former au moins deux circuits distincts de fluide caloporteur.

**13.** Procédé d'adaptation du débit de fluide caloporteur d'un circuit de fluide caloporteur d'un réacteur échangeur (1) selon l'une quelconque des revendications précédentes, **caractérisé en ce qu'**il comporte l'étape consistant à agir sur les moyens de modification (10) de l'élément distributeur (6) de fluide caloporteur et/ou de l'élément collecteur (7) de fluide caloporteur pour modifier la distribution du fluide caloporteur respectivement vers les canaux caloporteurs (5) et/ou depuis les canaux caloporteurs (5).

**14.** Procédé selon la revendication 13, **caractérisé en ce qu'**il comporte l'étape de modification, notamment par ajout, déplacement et/ou suppression, d'une ou de plusieurs parois internes (10) de l'élément distributeur (6) de fluide caloporteur et/ou de l'élément collecteur (7) de fluide caloporteur pour modifier le débit de fluide caloporteur.

**Patentansprüche**

**1.** Austauschreaktor (1), welcher dazu vorgesehen ist, endotherme oder exotherme katalytische Reaktionen auszuführen, umfassend:

- einen Reaktorkörper (2),
- einen reaktiven Kreislauf, umfassend eine Mehrzahl von Reaktivkanälen (3), welche einen Katalysator umfassen, gegebenenfalls getragen von einer katalytischen monolithischen Struktur,
- einen Kreislauf für ein Wärmeübertragungsfluid zum Kühlen der Reaktivkanäle (3), umfassend eine Mehrzahl von Wärmeübertragungskanälen (5),
- ein Verteilerelement (6) für Wärmeübertragungsfluid, angeordnet stromaufwärts der Wärmeübertragungskanäle (5), sowie ein Sammelelement (7) für Wärmeübertragungsfluid, angeordnet stromabwärts der Wärmeübertragungskanäle (5),

**dadurch gekennzeichnet, dass** das Verteilerelement (6) für Wärmeübertragungsfluid und/oder das Sammelelement (7) für Wärmeübertragungsfluid Mittel zum Modifizieren (10) der Verteilung des Wärmeübertragungsfluids jeweils in Richtung der Wärmeübertragungskanäle (5) und/oder aus den Wärmeübertragungskanälen (5) zum Modifizieren der thermischen Eigenschaften des Wärmeübertragungsfluid-Kreislaufs umfassen, wobei die Mittel zum Modifizieren der Verteilung des Wärmeübertragungsfluids die Modifikation von dem oder den Durchgangsabschnitten des Wärmeübertragungsfluids zwischen dem Verteilerelement (6) für das Wärmeübertragungsfluid und/oder dem Sammelelement (7) für das Wärmeübertragungsfluid und den Wärmeübertragungskanälen (5) umfassen, durch die Modifikation der Anordnung von einer oder mehreren internen Wänden (10) des Verteilerelements (6) für das Wärmeübertragungsfluid und/oder des Sammelelements (7) für das Wärmeübertragungsfluid.

2. Austauschreaktor nach Anspruch 1, **dadurch gekennzeichnet, dass** das Verteilerelement (6) für das Wärmeübertragungsfluid und/oder das Sammelelement (7) für das Wärmeübertragungsfluid eine oder mehrere feste interne Wände (10) umfassen.

3. Austauschreaktor nach Anspruch 1 oder 2, **dadurch gekennzeichnet, dass** das Verteilerelement (6) für das Wärmeübertragungsfluid und/oder das Sammelelement (7) für das Wärmeübertragungsfluid eine oder mehrere entnehmbare interne Wände (10) umfassen, wobei das Verteilerelement (6) für das Wärmeübertragungsfluid und/oder das Sammelelement (7) für das Wärmeübertragungsfluid insbesondere eine oder mehrere Standorte (11) für das Anbringen von einer oder mehreren internen Wänden (10) umfassen.

4. Austauschreaktor nach einem der Ansprüche 1 bis 3, **dadurch gekennzeichnet, dass** das Verteilerelement (6) für das Wärmeübertragungsfluid und/oder das Sammelelement (7) für das Wärmeübertragungsfluid eine oder mehrere in dem Innenraum des Verteilerelements (6) für das Wärmeübertragungsfluid und/oder des Sammelelements (7) für das Wärmeübertragungsfluid bewegbare interne Wände (10) umfassen, insbesondere durch Translation und/oder durch Rotation.

5. Austauschreaktor nach einem der Ansprüche 1 bis 4, **dadurch gekennzeichnet, dass** das Verteilerelement (6) für das Wärmeübertragungsfluid und/oder das Sammelelement (7) für das Wärmeübertragungsfluid eine oder mehrere interne Wände (10) umfassen, welche mit Regelungsventilen (12) für den Durchfluss des Wärmeübertragungsfluids versehen sind.

6. Austauschreaktor nach einem der Ansprüche 1 bis 5, **dadurch gekennzeichnet, dass** das Verteilerelement (6) für das Wärmeübertragungsfluid und/oder das Sammelelement (7) für das Wärmeübertragungsfluid wenigstens einen ersten Abschnitt (13), welcher eine Umgehungseinrichtung bildet, und einen zweiten Abschnitt (14) umfassen, umfassend eine Mehrzahl von Kammern (16), welche durch eine oder mehrere interne Wände (10) begrenzt und zwischen dem Reaktorkörper (2) und dem ersten Abschnitt (13) angeordnet sind, wobei jede Kammer (16) des zweiten Abschnitts (12) mit dem ersten Abschnitt (13) über den Umweg eines Regelungsventils (15) für den Durchfluss des Wärmeübertragungsfluids verbunden ist.

7. Austauschreaktor nach Anspruch 6, **dadurch gekennzeichnet, dass** er ein Umgehungselement (17) umfasst, welches direkt das Verteilerelement (6) und das Sammelelement (7) für das Wärmeübertragungsfluid verbindet, gegebenenfalls über den Umweg von einem oder mehreren Regelungsventilen (15) für den Durchfluss des Wärmeübertragungsfluids.

8. Austauschreaktor nach einem der vorhergehenden Ansprüche, **dadurch gekennzeichnet, dass** die Wärmeübertragungskanäle (5) in transversaler Weise bezüglich der Reaktivkanäle (3) angeordnet sind, wobei sich die Reaktivkanäle (3) insbesondere longitudinal erstrecken und sich die Wärmeübertragungskanäle (5) insbesondere transversal erstrecken.

9. Austauschreaktor nach einem der vorhergehenden Ansprüche, **dadurch gekennzeichnet, dass** er ein Verteilerelement (8) für Reaktive umfasst, welches stromaufwärts der Reaktivkanäle (3) angeordnet ist, sowie ein Sammelelement (9) für Reaktive, welches stromabwärts der Reaktivkanäle (3) angeordnet ist.

10. Austauschreaktor nach einem der vorhergehenden Ansprüche, **dadurch gekennzeichnet, dass** die Reaktivkanäle (3) einen Katalysator in Kornform umfassen.

11. Austauschreaktor nach einem der Ansprüche 1 bis 9, **dadurch gekennzeichnet, dass** die Reaktivkanäle (3) einen Katalysator umfassen, welcher durch eine katalytische monolithische Struktur getragen ist.

12. Austauschreaktor nach einem der vorhergehenden Ansprüche, **dadurch gekennzeichnet, dass** er wenigstens zwei unterschiedliche Verteilerelemente und/oder Sammelelemente für das Wärmeübertragungsfluid umfasst, oder ein Verteilerelement (6) und/oder Sammelelement (7) für das Wärmeübertragungsfluid, umfassend einen oder mehrere Eingänge (F1, F1') und einen oder mehrere Ausgänge (F2, F2') für das Wärmeübertragungsfluid, um wenigstens zwei unterschiedliche Kreisläufe für das Wärmeübertragungsfluid zu bilden.

13. Verfahren zum Einstellen eines Durchflusses von Wärmeübertragungsfluid in einem Wärmeübertragungsfluid-Kreislauf eines Austauschreaktors (1) nach einem der vorhergehenden Ansprüche, **dadurch gekennzeichnet, dass** es den Schritt umfasst, welcher aus einem Einwirken auf die Modifikationsmittel (10) des Verteilerelements (6) für das Wärmeübertragungsfluid und/oder des Sammelelements (7) für das Wärmeübertragungsfluid besteht, um die Verteilung des Wärmeübertragungsfluids jeweils in Richtung der Wärmeübertragungskanäle (5) und/oder von den Wärmeübertragungskanälen (5) zu modifizieren.

14. Verfahren nach Anspruch 13, **dadurch gekennzeichnet, dass** es den Schritt einer Modifikation, insbesondere durch Zugeben, Verlagern und/oder Entfernen von einer oder mehreren internen Wänden (10) des Verteilerelements (6) für das Wärmeübertragungsfluid und/oder des Sammelelements (7) für das Wärmeübertragungsfluid umfasst, um den Durchfluss des Wärmeübertragungsfluids zu modifizieren.

### Claims

1. Exchanger reactor (1), intended for the execution of endothermic or exothermic catalytic reactions, including:

   - a reactor body (2),
   - a reagent circuit comprising a plurality of reagent channels (3) comprising a catalyst, optionally supported by a catalytic monolithic structure,
   - a heat-transfer fluid circuit for cooling the reagent channels (3), comprising a plurality of heat-transfer channels (5),
   - a heat-transfer fluid distributing element (6), situated upstream from the heat-transfer channels (5), and a heat-transfer fluid collecting element (7), situated downstream from the heat-transfer channels (5),

   **characterised in that** the heat-transfer distributing element (6) and/or the heat-transfer fluid collecting element (7) include means (10) for modifying the distribution of heat-transfer fluid respectively to the heat-transfer channels (5) and/or from the heat-transfer channels (5) so as to modify the thermal characteristics of the heat-transfer fluid circuit, said means for modifying the distribution of heat-transfer fluid including the modification of the flow cross-section(s) of the heat-transfer fluid between the heat-transfer fluid distributing element (6), and/or the heat-transfer fluid collecting element (7), and the heat-transfer channels (5), by modifying the arrangement of one or a plurality of internal walls (10) of the heat-transfer fluid distributing element (6) and/or of the heat-transfer fluid collecting element (7).

2. Exchanger reactor according to claim 1, **characterised in that** the heat-transfer fluid distributing element (6) and/or heat-transfer fluid collecting element (7) include one or a plurality of fixed internal walls (10).

3. Exchanger reactor according to claim 1 or 2, **characterised in that** the heat-transfer fluid distributing element (6) and/or the heat-transfer fluid collecting element (7) include one or a plurality of removable internal walls (10), the heat-transfer fluid distributing element (6) and/or the heat-transfer fluid collecting element (7) particularly including one or a plurality of locations (11) for positioning one or a plurality of internal walls (10).

4. Exchanger reactor according to one of claims 1 to 3, **characterised in that** the heat-transfer fluid distributing element (6) and/or the heat-transfer fluid collecting element (7) include one or a plurality of movable internal walls (10) inside the heat-transfer fluid distributing element (6) and/or the heat-transfer fluid collecting element (7), particularly by translation and/or by rotation.

5. Exchanger reactor according to any one of claims 1 to 4, **characterised in that** the heat-transfer fluid distributing element (6) and/or the heat-transfer fluid collecting element (7) include one or a plurality of internal walls (10) equipped with heat-transfer fluid flow regulating valves (12).

6. Exchanger reactor according to any one of claims 1 to 5, **characterised in that** the heat-transfer fluid distributing element (6) and/or the heat-transfer fluid collecting element (7) include at least one first part (13), forming a bypass device, and a second part (14), including a plurality of compartments (16) delimited by one or a plurality of internal walls (10) and situated between the reactor body (2) and the first part (13), each compartment (16) of the second part (14) being connected to the first part (13) via a heat-transfer fluid flow regulating valve (15).

7. Exchanger reactor according to claim 6, **characterised in that** it includes a bypass element (17) connecting directly the heat-transfer fluid distributing element (6) and collecting element (7), optionally via one or a plurality of heat-transfer fluid flow regulating valves (15).

8. Exchanger reactor according to any one of the preceding claims, **characterised in that** the heat-transfer channels (5) are arranged transversely with respect to the reagent channels (3), the reagent channels (3) extending particularly longitudinally and the heat-transfer channels (5) extending particularly transversally.

9. Exchanger reactor according to any one of the preceding claims, **characterised in that** it includes a reagent distributing element (8), situated upstream from the reagent channels (3), and a reagent collecting element (9), situated downstream from the reagent channels (3).

10. Exchanger reactor according to any one of the preceding claims, **characterised in that** the reagent channels (3) include a catalyst in grain form.

11. Exchanger reactor according to any one of claims 1 to 9, **characterised in that** the reagent channels (3) include a catalyst supported by a catalytic monolithic structure.

12. Exchanger reactor according to any one of the preceding claims, **characterised in that** it includes at least two separate heat-transfer fluid distributing and/or collecting elements, or a heat-transfer fluid distributing (6) and/or collecting element (7) comprising one or a plurality of inlets (F1, F1') and one or a plurality of outlets (F2, F2') of heat-transfer fluid, so as to form at least two separate heat-transfer fluid circuits.

13. Method for adapting the flow of heat-transfer fluid of a heat-transfer fluid circuit of an exchanger reactor (1) according to any one of the preceding claims, **characterised in that** it includes the step consisting of acting upon the modification means (10) of the heat-transfer fluid distributing element (6) and/or of the heat-transfer fluid collecting element (7) to modify the distribution of heat-transfer fluid respectively to the heat-transfer channels (5) and/or from the heat-transfer channels (5).

14. Method according to claim 13, **characterised in that** it includes the step for modifying, particularly by adding, moving and/or removing, one or a plurality of internal walls (10) of the heat-transfer fluid distributing element (6) and/or of the heat-transfer collecting element (7) to modify the flow of heat-transfer fluid.

**Fig. 1A**

**Fig. 1B**

**Fig. 2A**

**Fig. 2B**

**Fig. 3**

**Fig. 4**

**Fig. 5A**

**Fig. 5B**

**Fig. 5C**

V

**Fig. 6A**

V

V

**Fig. 6B**

V

V

V

**Fig. 6C**

V

V

V

**Fig. 6D**

**Fig. 7**

**Fig. 8**

**Fig. 9**

**Fig. 10**

**Fig. 11**

**Fig. 12**

**Fig. 13**

**Fig. 14**

Fig. 15

Fig. 16

Fig. 17

Fig. 18

Fig. 19

Fig. 20

Fig. 21

**EP 3 212 323 B1**

## RÉFÉRENCES CITÉES DANS LA DESCRIPTION

**Documents brevets cités dans la description**

- US 4298694 B1

- US 4839391 B1